# EUROPÄISCHE PATENTSCHRIFT

(11) **EP 2 397 311 B1**
(45) Veröffentlichungstag und Bekanntmachung des Hinweises auf die Patenterteilung: **26.09.2018**
(21) Anmeldenummer: 10166105.6
(22) Anmeldetag: 16.06.2010
(51) Int. Cl.: B29C 65/00, B29C 65/14, B29C 65/20

(54) **Verfahren und Vorrichtung zum Stumpfschweissen von Rohren aus thermoplastischem Kunststoff**
Device and method for butt welding pipes made of thermoplastic
Procédé et dispositif de soudage bout à bout de tuyaux en matière synthétique thermoplastique

(43) Veröffentlichungstag der Anmeldung: 21.12.2011
(73) Patentinhaber: Georg Fischer Rohrleitungssysteme AG, 8201 Schaffhausen (CH)
(72) Erfinder: Wermelinger, Jörg, 8200 Schaffhausen (CH)
(74) Vertreter: Fenner, Seraina

(56) Entgegenhaltungen:
- EP-A1- 1 295 697
- EP-A2- 0 453 903
- EP-A2- 0 535 454
- EP-A2- 0 802 036
- DE-U1-202006 003 138
- FR-A1- 2 598 653
- US-A- 5 620 625

## Beschreibung

Die Erfindung betrifft ein Verfahren zum Verschweissen von Kunststoffrohren aus thermoplastischem Kunststoff mittels eines Stumpfschweissverfahrens, wobei die Rohre in koaxialer Lage zueinander mittels Spannstellen gehalten werden, mittels eines Hobels der zwischen die Spannstellen bringbar ist, gehobelt werden und mittels Heizspiegel der anstelle des Hobels montierbar ist, durch Berührung des Heizspiegels aufgeheizt werden, wobei durch die Erwärmung der freien zu verschweissenden Rohrenden ein Aufschmelzbereich erzeugt wird, der beim Verpressen eine Wulst bildet.
Das bekannte Verfahren zur Stumpfschweissung von zwei Kunststoffrohren, läuft bisher im Wesentlichen immer gleich ab, ob es durch manuelle oder automatische Maschinen ausgeführt wird. Die Kunststoffrohre werden in die dafür vorgesehenen Spannstellen eingespannt, wobei die sich gegenüberliegenden Rohrenden aus den Spannstellen herausragen und durch den zwischen den beiden Rohrenden befindenden Hobel und das gegenseitige Zusammenfahren der Spannstellen, in Richtung des rotierenden Hobels, alle Beschädigungen und Verunreinigungen spanend entfernt werden. Zusätzlich wird erreicht, dass die Stirnseiten der Rohrenden rechtwinklig zur Achse des Rohres und parallel zur gegenüberliegenden Stirnseite des andern Rohrendes verlaufen. Anschliessend werden die Rohrenden auseinander gefahren und der Hobel entfernt, daraufhin wird ein Heizspiegel zwischen die Rohre gebracht, worauf die Spannstellen wieder gegeneinander fahren um die Stirnseiten der Rohrenden in Kontakt mit dem Heizspiegel zu bringen. Das Angleichen der Rohrenden findet unter einem vorgegebenen, konstanten Druck, welcher abhängig vom Material, dem Rohrdurchmesser sowie der Wanddicke ist, statt. Der Druck, welcher meist über ein Hydraulikaggregat erzeugt wird, wird so lange auf die beiden Rohrenden bzw. den Heizspiegel ausgeübt, bis am Umfang der Rohrenden Wülste entstehen, die den vorgegebenen Abmessungen entsprechen. In der darauffolgenden Anwärmphase wird der Druck verringert und über eine vorgeschriebene Zeit beibehalten um eine in der Fügezone des Kunststoffrohrs zur Verschweissung benötigtes Temperaturprofil zu erzielen. Danach werden die Spannstellen wieder auseinander geschoben, der Heizspiegel wird entfernt und die Rohrenden anschliessend unter einem vorgegebenen Druck und einer definierte Zeitspanne zusammengepresst, so dass eine erforderliche Durchdringung der Rohrenden erfolgt und eine Verschweissung der Rohrenden garantiert ist. Bei dieser Art zur Herstellung von Schweissverbindungen von Kunststoffrohren sind die Wulste in ihrer Grösse nicht optimiert und fallen gross aus, was einen nachteiligen Einfluss auf die Strömung im Rohr zur Folge hat und zudem lange Prozesszeiten erfordert. Solche Stumpfschweissmaschinen sind aus den Schriften EP 0 453 903, DE 20 2006 003 138 U1 und EP 0802 036 A2 bekannt. Eine ähnliche Technologie mit berührungsloser Heizvorrichtung wird in der EP0535454 gezeigt.

In der DE 198 27 146 A1 ist ein Verfahren zum Stumpfschweissen von Kunststoffrohren offenbart, wobei der Antrieb der Spannstellen durch einen Elektromotor erfolgt welchem eine Steuerung zugewiesen ist. Ausgehend von der Stellung in der beide Rohrenden mit dem Heizelement in Berührung treten, verfahren die Spannstellen nach einer vorgegebenen, der Steuerung hinterlegten Zeit-Weg-Kurve, welcher zum Angleichen ein erforderlicher Weg zugeordnet ist und während der Anwärmphase im wesentlichen angehalten wird. Nach dem Entfernen der Heizelemente, ausgehend von der Stellung in der zu Beginn des Fügevorgangs beide Rohrenden miteinander in Berührung kommen, legen nach einer zweiten vorbestimmten Zeit-Weg-Kurve die Spannstellen einen bestimmten zum Fügen erforderlichen Weg zurück und werden während der Abkühlphase im Wesentlichen angehalten.
Nachteilig an einer solchen Lösung ist, dass das Verfahren eine komplexe Steuerung benötigt in der für jeden Durchmesser und jedes Material eine dementsprechende Zeit-Weg-Kurve hinterlegt ist. Zudem benötigt die Vorrichtung Fühler bzw. Sensoren zur Bestimmung der Rohrendenposition die während einer Schweissung zweimal ermittelt werden muss.

Es ist Aufgabe der Erfindung ein Verfahren vorzuschlagen, dass eine Rohrendenverschweissung mit einer minimalen Wulstbildung, unter Einhaltung der Sicherheitsbedingungen ermöglicht und den Energie- und Zeitaufwand minimiert und zudem mit einer kostengünstigen und einfachen Steuerung auskommt.

Diese Aufgabe wird erfindungsgemäss dadurch gelöst, dass der Überstand der Rohre auf ein definiertes Mass gehobelt wird, das heisst, dass die Rohüberstände bei jeder Schweissung auf die selbe Länge vorbereitet werden, was durch mechanische Anschläge, die als Wegbegrenzer dienen, erreicht wird oder durch ein eingebautes und mit der Steuerung verbundenes Wegmesssystem, welches ermöglicht die gewünschte Position exakt anzufahren. Dadurch, dass auf ein definiertes Mass gehobelt wird und die Temperatur des Heizspiegels bzw. die Anwärmzeit mit der Rohrtemperatur welche der Umgebungstemperatur entspricht, abgeglichen wird, ist eine separate Angleichphase die über eine, getrennt von der Anwärmphase, definierte Zeitdauer läuft nicht mehr notwendig. Bisher wurde die Angleichphase, in der während einer vorgegebenen Zeitdauer ein definierter Druck auf die Rohrüberstände ausgeübt wurde, genutzt um eine gewünschte den Anforderungen entsprechende Wulst zu erzielen. Durch die Dimension der Wulst kann auf die Temperatur in der Fügezone geschlossen werden und gewährt somit eine gute Schweissung, allerdings entstehen so grosse Wülste, die die Strömung in den Rohren beeinträchtigen, was durch das neue, hier beschriebene Verfahren vermindert werden kann. Da nun aber ein Berühren der Rohrüberstände mit dem Heizspiegel Vorraussetzung für eine gute Wärmeübertragung ist, weist der Rohrüberstand eine Längenzugabe von bis zu 0.5mm im Vergleich zum Heizanschlag auf, dadurch ist ein minimales Angleichen gegeben, welches in die Phase des Anwärmens integriert wird, da es durch die Temperaturanpassung des Heizspiegels bzw. der Anpassung der Dauer der Anwärmphase an die Rohr- bzw. Umgebungstemperatur keine separate Angleichphase mehr benötigt. Somit hat das Angleichen im neuen, hier beschriebenen Verfahren nicht mehr dieselbe Aufgabe wie im herkömmlichen DVS-Verfahren.

Die Heizspiegeltemperatur wird im neuen, hier beschriebenen Verfahren an die Rohrtemperatur welche der Umgebungstemperatur entspricht angepasst. Die Umgebungstemperatur wird beispielsweise mit Hilfe eines Sensors ermittelt und wird in der Steuerung mit einem Standardwert, dem eine Heizspiegeltemperatur zugeordnet ist verglichen. Die Differenz zwischen des Standardwerts und des gemessenen Werts wird zur Heizspiegeltemperatur addiert oder von der Heizspiegeltemperatur des Standardwertes subtrahiert. Bei einer tiefen Umgebungstemperatur benötigt es eine entsprechend höhere Heizspiegeltemperatur und umgekehrt.
Eine andere Möglichkeit den Schweissvorgang an die Umgebungstemperatur anzupassen besteht darin, dass die Zeit der Anwärmphase entsprechend verlängert oder verkürzt wird. so dass bei einer tiefen Umgebungstemperatur bzw. Rohrtemperatur die Anwärmphase hinreichend verlängert wird. Anstelle der Ermittlung der Umgebungstemperatur ist es auch denkbar die Rohrtemperatur direkt am Rohr zu messen.
In der Fügephase besteht die Möglichkeit den Fügeweg zu begrenzen, mittels eines mechanischen Anschlags oder eines Wegmesssystems, natürlich besteht auch im neuen, hier beschriebenen Verfahren die Alternative das Fügen druckgesteuert durchzuführen. Das neue, hier beschriebene Verfahren zeichnet sich durch die Verkürzung der Schweisszeit, einen geringen Energieaufwand sowie die Erzielung einer möglichst kleinen Wulst aus. Wobei das neue, hier beschriebene Verfahren so einfach wie möglich durchführbar ist, das heisst das neue, hier beschriebene Verfahren ist ohne jegliche Drucksensoren und Wegmesssysteme durchführbar, allerdings ist eine Erweiterung mit solchen Applikationen durchaus denk- und machbar.

Im Folgenden wird die Erfindung anhand von Zeichnungen eines Ausführungsbeispiels dargestellt. Es zeigen
- Fig. 1: eine schematische Ansicht einer Vorrichtung zum Verscheissen von Kunststoffrohren nach dem neuen, hier beschriebenen Verfahren vor dem Überhobeln,
- Fig. 2: eine schematische Ansicht einer Vorrichtung zum Verschweissen von Kunststoffrohren nach dem neuen, hier beschriebenen Verfahren während dem Überhobeln,
- Fig. 3: eine schematische Ansicht einer Vorrichtung zum Verschweissen von Kunststoffrohren nach dem neuen, hier beschriebenen Verfahren vor dem Anwärmen,
- Fig. 4: eine schematische Ansicht einer Vorrichtung zum Verscheissen von Kunststoffrohren nach dem neuen, hier beschriebenen Verfahren während dem Anwärmen,
- Fig. 5: zwei Zeit-Druck-Diagramme in der Fügezone während des kompletten Schweissprozesses.

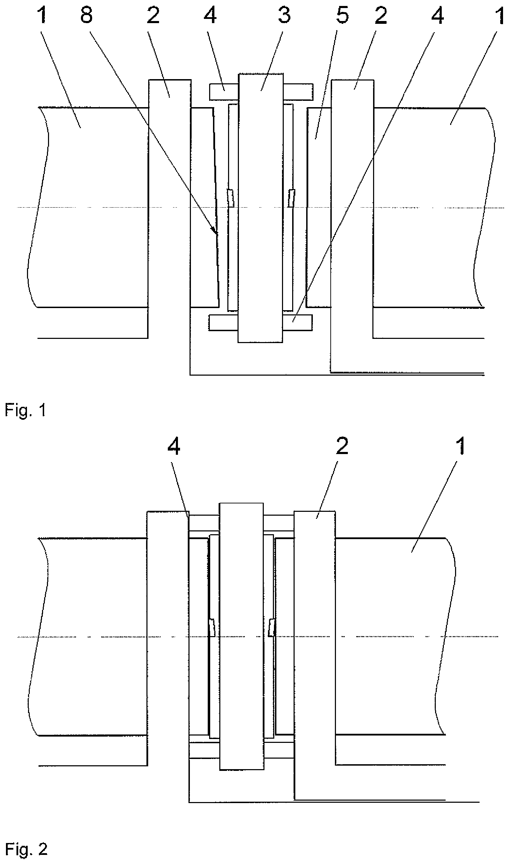

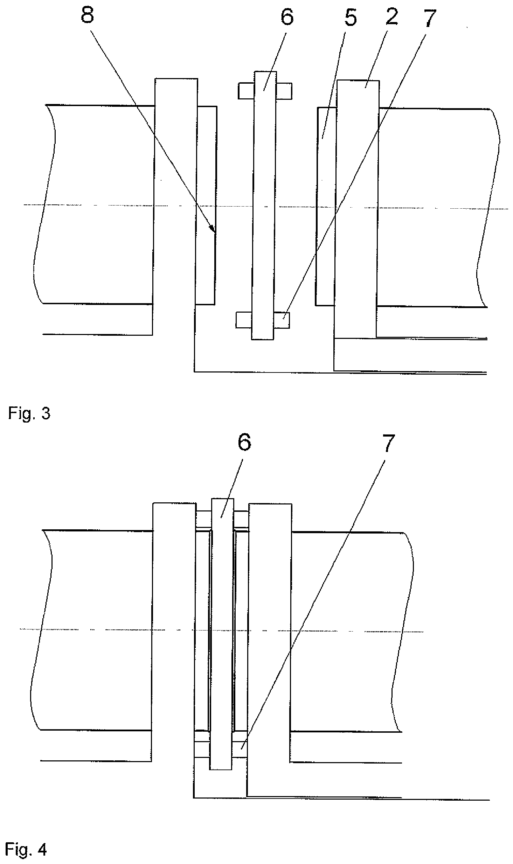

Fig. 1 zeigt die in den Spannstellen 2 eingespannten Rohre 1 vor dem Überhobeln. Am Hobel 3 befinden sich fest montierte Hobelanschläge 4, wodurch sich die Längen der Rohrüberstände 5 genau auf Mass abhobeln lassen, zudem ist garantiert, dass bei jeder Schweissung derselbe Wulst entsteht. In Fig. 2 sind die Spannstellen 2 gegen den Hobel 3 gefahren, bis sie an den Hobelanschlägen 4 anstehen, wodurch die genaue Rohrüberstandslänge definiert ist. In einem weiteren Schritt werden die Spannstellen 2 mit den eingespannten Rohren 1 wieder auseinander gefahren um an die Stelle des Hobels 3 den Heizspiegel 6 zu platzieren, wie in Fig. 3 dargestellt. Der Heizspiegel 6 weist Heizanschläge 7 auf wodurch ein kontrolliertes, wenn nötiges Angleichen durchführbar ist. Die Heizanschläge 7 sind im Vergleich mit den Hobelanschlägen 4 so ausgebildet, dass sie um bis zu 0,5mm kürzer sind, um zu gewährleisten, dass der Rohrüberstand 5 mit dem Heizspiegel 6 beidseitig in Kontakt kommt. Fig. 4 zeigt, dass die Rohrüberstände 5 geringfügig länger sind als die Heizanschläge 7, wodurch das Zusammenfahren der Spannstellen 2 gegen den Heizspiegel 6 einen Druck im Rohüberstand 5 verursacht, bis sich die Länge des Rohrüberstanders 5 durch die Erwärmung auf die Länge der Heizanschläge 7 reduziert hat bzw. weggeschmolzen ist und die Spannstellen 2 an den Heizanschlägen 7 anstehen.

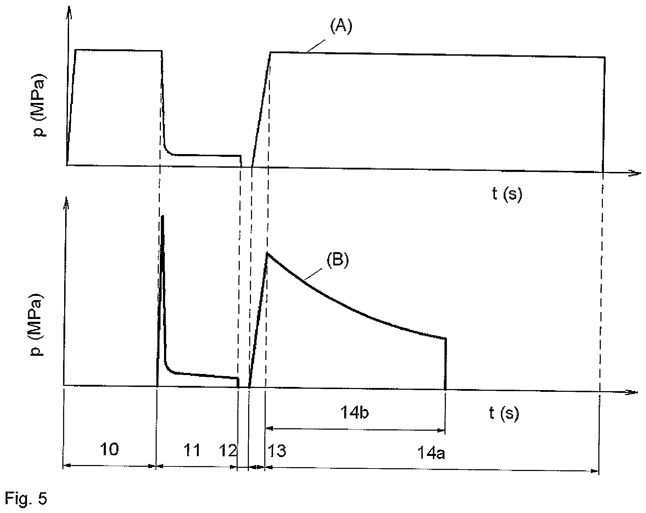

Fig. 5 zeigt zwei Druck-Zeit-Kurven von Kunststoffrohr-Verschweissungen. Kurve A stellt ein herkömmliches Stumpfschweissverbindungsverfahren nach DVS (Deutscher Verband für Schweissen) nach dem Hobeln dar. Als erste Phase ist das Angleichen 10 ersichtlich, durch welches die überstehenden und bereits gehobelten, jedoch nicht auf Mass gehobelten, Rohrenden 8 an den auf eine gewünschte Temperatur gebrachten Heizspiegel 6 gedrückt werden. Der Angleichvorgang 10 bedingt einen gewissen Angleichdruck. Der materialabhängige Angleichdruck wird durch das Gegeneinanderpressen der Rohrenden 8 an den Heizspiegel 6 erzeugt und konstant beibehalten bis ein gewünschter Wert erreicht ist, der durch eine optische Kontrolle der Abmessung der Wulst besteht. Als nächste Phase erfolgt der Anwärmvorgang 11, bei dem der Druck auf nahezu null reduziert wird. Dieser Vorgang gewährt der Fügezone die zur Schweissung notwendige Wärme. Die Dauer um die erforderliche Schmelzschichtdicke zu erzeugen, kann aus einer Tabelle bzw. Erfahrungswerten ermittelt werden.
Als weiterer Schritt erfolgt die Umstellung 12, das heisst die Rohre 1 werden auseinander gefahren um den Heizspiegel 6 zu entfernen und um danach sofort die Rohre 1 in die Schweissposition zu fahren. Die Rohrenden 8 werden zusammengefahren bis der gewünschte, den Anforderungen entsprechende Fügedruck erreicht ist. Dadurch soll ein Schmelzfluss in der Fügezone während der Fügephase 13 bewirkt werden. In der anschliessenden Abkühlphase 14a wird der Druck aufrecht gehalten, die Abkühlzeit hängt von der Breite der Fügezone, der erreichten Schmelztemperatur, dem in der Schweissnaht vorliegenden Schmelzvolumen, den thermischen Eigenschaften des Kunststoffs ab. Der Abkühlvorgang ist beendet, wenn die Schmelze in der Fügezone erstarrt ist und der Kunststoff genügend Festigkeit erreicht hat.

Kurve B zeigt den Zeit-Druck-Verlauf der vorliegenden Erfindung, dadurch dass die Rohrüberstände 6 auf ein exaktes Mass gehobelt sind und dass die Temperatur des Heizspiegels 6 bzw. die Anwärmzeit 11 der Umgebungstemperatur somit der Rohrtemperatur angepasst wird, benötigt das neue, hier beschriebene Verfahren kein Angleichen 10 mehr. Die Umgebungstemperatur wird durch einen Sensor erfasst und beispielsweise mit einem Standardwert, dem eine Heizspiegeltemperatur zugeordnet ist verglichen und die Differenz berechnet. Die Temperaturdifferenz der Umgebungstemperatur bzw. Rohrtemperatur zum Standardwert wird von der Heizspiegeltemperatur entsprechend subtrahiert oder addiert. Das heisst, bei tiefen Umgebungs- bzw. Rohrtemperaturen wird die Heizspiegeltemperatur um die entsprechende Temperaturdifferenz zum Standardwert addiert um die fehlende Temperatur bei der Schweissung zu kompensieren. Bei Rohrtemperaturen oberhalb des Standardwertes wird die Temperaturdifferenz dementsprechend subtrahiert. Durch ein solches Vorgehen kann die Phase des Angleichens 10 eingespart werden. Der kurzeitig erhöhte Druck am Anfang der Anwärmphase 11 in Kurve B entsteht durch die, wie bereits erwähnte, Rohrüberstandzugabe von bis zu 0.5mm im Vergleich zur Länge des Heizanschlags 7, dadurch ist gesichert, dass die Rohrüberstände 5 mit dem Heizspiegel 6 in Berührung kommen und eine bestmögliche Wärmeübertragung stattfindet. Der Druck im Rohüberstand sinkt sobald das Material im Rohrüberstand 5 so weich ist, dass die Längenzugabe von maximal 0.5mm weggedrückt bzw. weggeschmolzen ist und die Spannstellen an den Heizanschlägen 7 anstehen, dann verringet sich der Druck im Material auf nahezu null. Die Anwärmphase 11 der Kurve B entspricht einer vorgegebenen Zeitspanne um eine ausreichende Wärmeaufnahme zur Verschweissung in den Fügezonen zu gewährleistet. Theoretisch wäre es denkbar, während der Anwärmphase 11 des neuen hier beschriebenen Verfahrens den hohen Druck zu Beginn zu vermeiden, allerdings müssten die Rohrüberstände genau auf Mass ohne jegliche Zugabe gehobelt werden und das würde das Risiko mit sich bringen, dass die Rohrenden 8 nicht mit Sicherheit am Heizspiegel 6 anliegen würden, was einen schmalen Luftspalt zwischen Heizspiegel 6 und Rohrende 8 verursachen und eine gute Wärmeübertragung behindern würde. In der Phase 12 erfolgt die Umstellung, der Heizspiegel 6 wird nach dem Auseinanderfahren der Rohre 1 entfernt, woraufhin die Rohre 1 in der Fügephase 13 zusammengefahren werden. Dieser Vorgang kann sowohl weg- wie auch druckgesteuert ablaufen, zudem ist auch eine Kombination einer Weg-Drucksteuerung während der Fügephase 13 denkbar.
Durch die Materialeinsparung im neuen, hier beschriebenen Verfahren B wodurch eine unnötig grosse Wulstbildung bei der Verschweissung vermieden werden kann, ist die Abkühlphase 14b entsprechend kürzer. In Fig. 5 ist ein weggesteuertes Fügen 13 dargestellt, ersichtlich durch den Druckabfall nach dem Fügen, da das Material in der Fügezone beim Abkühlen 14b schwindet. Denkbar ist auch ein druckgesteuertes Fügen, was aus dem Stand der Technik bekannt ist und was während der Abkühlphase den Druck konstant beibehalten würde. Beide Varianten der Abkühlung werden während einer der Steuerung hinterlegten vorgegebenen Zeitspanne durchgeführt. Zur Überwachung des Abkühlvorgangs ist auch eine Messung der Rohrtemperatur in der Fügezone während der Abkühlphase vorstellbar, wodurch festgestellt wird, wann die Temperatur ausreichend gesunken ist um die Rohre 1 aus den Spannstellen 2 zu lösen. Das Schweissverfahren gewährt neben geringem Zeitbedarf und Energieeinsparung eine Schweissung, die den Anforderungen der Normen entspricht, sowie eine optimierte Rohrströmung aufgrund der minimierten Wulstbildung.

## Patentansprüche

1. Verfahren zum Verschweissen von Kunststoffrohren (1) aus thermoplastischem Kunststoff mittels eines Stumpfschweissverfahrens, wobei die Rohre (1) in koaxialer Lage zueinander mittels Spannstellen (2) gehalten werden, mittels eines Hobels (3) der zwischen die Spannstellen (2) bringbar ist, gehobelt werden und mittels eines Heizspiegels (6), der anstelle des Hobels (3) montierbar ist, durch Berührung des Heizspiegels aufgeheizt werden, wobei durch die Erwärmung der freien zu verschweissenden Rohrenden (8) ein Aufschmelzbereich erzeugt wird, der beim Verpressen eine Wulst bildet, wobei der Rohrüberstand (5) der jeweiligen Rohre (1) auf ein definiertes Mass gehobelt wird, und ein Angleichen während einer Anwärmphase (11) erfolgt.

2. Verfahren nach Anspruch 1, **dadurch gekennzeichnet, dass** die Fügephase (13) weggesteuert ist.

3. Verfahren nach einem der Ansprüche 1 oder 2, **dadurch gekennzeichnet dass** die Fügephase (13) druckgesteuert ist.

4. Verfahren nach Anspruch 1, **dadurch gekennzeichnet, dass** die Heiztemperatur des Heizspiegels sich entsprechend der Umgebungstemperatur anpasst, das heisst, bei tiefer Umgebungstemperatur eine entsprechend höhere Heizspiegeltemperatur und umgekehrt eingestellt wird.

5. Verfahren nach einem der Ansprüche 1 oder 4, **dadurch gekennzeichnet, dass** die Dauer der Anwärmphase abhängig von der Umgebungstemperatur ist.

## Claims

1. Method for welding plastic pipes (1) made of thermoplastic material by means of a butt-welding process, the pipes (1) being held in a coaxial position in relation to one another by means of clamping fixtures (2), trimmed by means of a trimmer (3) which can be brought between the clamping fixtures (2) and heated up by means of a heated tool (6), which can be fitted in place of the trimmer (3), by contacting the heated tool, the heating of the free pipe ends (8) to be welded having the effect of producing a melting region, which forms a bead when pressing occurs, wherein the pipe projection (5) of the respective pipes (1) is trimmed to a defined size, and an adjustment for contacting the heated tool takes place during a heating-up phase (11).

2. Method according to Claim 1, **characterized in that** the joining phase (13) is displacement-controlled.

3. Method according to either of Claims 1 and 2, **characterized in that** the joining phase (13) is pressure-controlled.

4. Method according to Claim 1, **characterized in that** the heating temperature of the heated tool adapts itself correspondingly to the ambient temperature, that is to say, in the case of a low ambient temperature, a correspondingly higher heated-tool temperature in set, and vice versa.

5. Method according to either of Claims 1 and 4, **characterized in that** the duration of the heating-up phase is dependent on the ambient temperature.

## Revendications

1. Procédé de soudage de tuyaux en plastique (1) constitués de plastique thermoplastique, au moyen d'un procédé de soudage bout à bout, les tuyaux (1) étant retenus en position coaxiale les uns par rapport aux autres au moyen de zones de serrage (2), étant rabotés au moyen d'un rabot (3) qui peut être amené entre les zones de serrage (2) et étant chauffés au moyen d'un miroir chauffant (6) qui peut être monté à la place du rabot (3), par contact du miroir chauffant, une zone de fusion étant produite par chauffage des extrémités libres à souder (8) des tuyaux, laquelle forme un bourrelet lors du pressage, le dépassement des tuyaux (5) des tuyaux respectifs (1) étant raboté à une dimension définie, et un ajustement étant effectué pendant une phase de chauffage (11).

2. Procédé selon la revendication 1, **caractérisé en ce que** la phase d'assemblage (13) est commandée à distance.

3. Procédé selon l'une quelconque des revendications 1 ou 2, **caractérisé en ce que** la phase d'assemblage (13) est commandée par pression.

4. Procédé selon la revendication 1, **caractérisé en ce que** la température de chauffage du miroir chauffant s'ajuste en fonction de la température de l'environnement, c'est-à-dire qu'à une température de l'environnement plus basse, il s'établit une température plus élevée de manière correspondante de la température du miroir chauffant, et inversement.

5. Procédé selon l'une quelconque des revendications 1 ou 4, **caractérisé en ce que** la durée de la phase de chauffage dépend de la température de l'environnement.
